# EUROPEAN PATENT SPECIFICATION

(11) **EP 2 228 352 B1**
(45) Date of publication and mention of the grant of the patent: **08.02.2012**
(21) Application number: 09461502.8
(22) Date of filing: 04.03.2009
(51) Int. Cl.: C04B 28/02, C04B 20/10

(54) **Mortar especially for shaped clinker bricks**
Mörtel besonders für geformte Klinkerziegel
Mortier specialement concu pour briques recuites

(43) Date of publication of application: 15.09.2010
(73) Proprietor: ALPOL Gips Sp. z o.o., 26-200 Konskie (PL)
(72) Inventor: Bak, Lukasz, 27-400, Ostrowiec Swietokrzyski (PL)
(74) Representative: Fietko-Basa, Sylwia

(56) References cited:
- GB-A- 1 088 485
- US-A- 5 721 016
- US-A1- 2006 054 056
- US-B1- 6 537 366

## Description

Mortar especially for shaped clinker bricks

The subject of the invention comprises mortar for shaped clinker bricks, used to lay and joint wall elements with the use of shaped clinker bricks and elevation elements available in the market. The invention is primarily meant for construction industry.

The already known mortars preventing occurrence of patches of efflorescence contained pozzolanic additives, in particular fly-ash, silica fume or trass flour and/or hydraulic additive, especially ground, granulated blast furnace slag that bind calcium hydroxide and/or aerating, hydrophobic additives and/or starch ethers.

Another mortar is also known that contains additives of nanometric size, in particular those that belong to the group of silicates.

The manner of protecting surfaces of building materials through the impregnating or priming treatment using aqueous solutions or suspensions containing silicon particles is known from patent description (United States Patent) No 5721016. The object of the patent is to protect surfaces in such a way that prevents washing out and access by salts responsible for efflorescence formation.

Moreover, concrete admixture with improved durability and efflorescence control containing a highly resilient colorant is known from United States Patent No. US 6537366 B1. The invention concerns the composition and making of coloured concrete which includes hydrophobic efflorescence control agents based on calcium stearates, zinc stearates, sodium stearates, butyl stearates, stearic acid derivatives, stearic acid salts, and mixtures thereof. The use of such compounds reduces the absorbability of a material especially at the initial stage. However, that protection is not durable as, over time, those compounds are washed out, which may cause efflorescence to occur.

Also, the process of making manufactured concrete products with reduced efflorescence is known from United States Patent Application No. US 2006/0054056 A1. The invention concerns the method of efflorescence reduction in manufactured concrete products by using one or more chemicals that can act as water absorbents, super absorbents, thickeners, either alone or in combination with other common concrete additives. Those compounds belong mainly to the group of cellulose ethers, starch ethers, polymer thickeners. However, those compounds cannot reduce porosity or absorb all the water that may penetrate the system and, consequently, wash out undesirable salts.

The composition and method of making efflorescence resilient concrete based on Portland cement, protected by means of substances containing an aqueous dispersion of pinaceae heavy ends, a mixture of tall oil pitch and tall oil resin either mixed into the concrete or applied on the surface are known from UK Patent No. 1088485.

The purpose of the invention is to develop a mortar that shall be resistant to migrations of dissolved salts and thus resistant to occurrence of patches of efflorescence and to fungal attacks. Migrating salts can come both from the ingredients of mortars, clinker tiles made of improper raw materials as well as they can be a product of atmospheric influence on mortars.

Mortar especially for shaped clinker bricks comprised of the dry mixture of cement, fillers, chemical additives and requiring addition of water only, according to the invention is characterised in that it contains from 15 to 28% of cement by weight, from 50 to 68% of quartz sand of grain size from 0.1 to 1.25 mm by weight, from 2 to 10% of quartz sand of grain size from 0.1 to 0.2 mm by weight, from 4 to 10% of limestone flour of grain size of up to 0.5 mm by weight, from 1 to 5% of quartz flour of grain size of up to 0.25 mm by weight, from 0.05 to 0.3% of modified cellulose ether by weight, from 0.5 to 1.0% of redispersible powder by weight, from 0.01 to 0.02% of aerating additive by weight, favourably from 0.1 to 4% of organic and non-organic pigments by weight, 0.05 to 0.5% of additive of nanometric size favourably belonging to the group of silicates by weight, from 0.2 to 0.5% of hydrophobic agent in the form of silicone, powder of nanometric size in capsules in wax envelopes by weight, and favourably from 0.03 to 0.3% of biocide by weight.

The mortar according to the invention favourably also contains additives of pozzolanic nature, especially fly-ash or silica fume or trass flour in the amount from 0.5 to 1.0%, and/or hydraulic additive especially ground, granulated blast furnace slag in the amount from 1.0 to 5.0%, and/or starch ethers in the amount from 0.01 to 0.02%, and/or flexibility-improving additives, especially added in the form of ready resin dispersion of acrylic co-polymer and/or styrene-butadiene co-polymer resins in the amount of up to 3%, and/or retarders and/or accelerators of cement binding and hardening process commonly known in the market and/or plasticisers or superplasticisers in the amount from 0.5 to 2% of the cement weight, and/or other additives that modify rheology, especially guar gum ethers in the amount from 0.02 to 0.1%.

The mortar designed especially for shaped clinker bricks according to the invention retains its physical and chemical properties in full range of values.

The mortar according to the invention offers much stronger resistance to migration of dissolved salts, as well as lower water absorption, lower absorbability, higher density of hardened mortar, higher compression strength and higher resistance to algae as compared to similar products in the market which was confirmed by tests of absorption, absorbability, ability to migrate the saturated solution of sodium sulphate, density of hardened mortar, and resistance to algae.

Tests in accordance with PN-EN 1015-18 standard confirmed that mortar constituting the subject of the invention demonstrates the lowest water absorption as compared to mortars available in the market.

The test that consisted in storing mortars in the w saturated solution of sodium sulphate confirmed that mortar featuring nano-additives constituting the subject of the invention demonstrates a much better resistance to the process of migration of dissolved salt.

The test that consisted in storing mortars infected with a mixture of green and blue-green algae in conditions favourable for their fast growth confirmed that mortar using biocide constituting the subject of the invention demonstrates resistance to algae.

Example 1

To achieve the usable mortar, the following ingredients were used: 18% of Portland cement CEM I 32.5R by weight, 67% of quartz sand of grain size 0.1-1.25 mm by weight, 2% of quartz sand of grain size 0.1-0.2 mm by weight, 10% of limestone flour of grain size of up to 0.5 mm by weight, 3% of quartz flour of grain size of up to 0.25 mm by weight, 0.05% of modified methylhydroxyethylcellulose of viscosity of 15000 mPa·s by weight, 0.5% of redispersible powder on the basis of vinyl acetate co-polymer and ethylene by weight, 0.01% of aerating additive by weight, 1% of ferric pigment by weight, 0.2% nanometer-sized additive belongs to the group of silicates, alkaline activated, modified by organic ingredients by weight, 0.2% of hydrophobic agent in the form of silicone, powder of nanometric size in capsules in wax envelopes by weight, 0.18% of biocide by weight, and 14.0% of water in relation to dry mass by weight.

The mortar was prepared for tests in accordance with PN EN-998-2 standard.

Then, the following tests were conducted:

-absorption of water, according to PN-EN 1015-18 standard "Methods of Testing Mortars for Walls - Part 18: Determination of water absorption factor caused by capillary raising of hardened mortar". The test consists in measurement of the amount of water absorbed in the given time on the fractures of hardened and stabilised beams of the following dimensions: 4x4x16 cm.

-compression strength according PN-EN 1015-11 standard "Methods of Testing Mortars for Walls - Part 11: Determination of compression and bending strength of the hardened mortar". The test consists in measurement of compression strength of beams of the following dimensions: 4x4x16 cm with the use of a hydraulic press.

-mortar's ability to block migration of sodium sulphate was also tested

by our own method. The test consists in storing for the period of 2 months

beams of the following dimensions: 4x4x16 cm made of mortar in saturated solution of sodium sulphate. The test result consists in observation of surfaces and salt migrations through the mortar on the beam broken in half after 2 months.

-mortar's resistance to algae was also tested. The test consists in storing on the culture medium the properly prepared samples of mortars in the form of rings (stabilised in normal conditions for 48 hours, then rinsed for 2 days so that the sample was in cold water for 8 hours a day) infected with a mixture of green and blue-green algae in the humidity chamber in temperature of 22°C for 12 hours under fluorescent light, and then for 12 hours in darkness each day. The test result consists in observation of the surface of the sample after a week from infection.

According to the example, the following results were achieved:

water absorption - 0.03 kg/m²· min^{1/2}

compression strength - 13 MPa

mortar's ability to block migration of sodium sulphate - no slats crystallised inside the mortar, surface of mortar was clear

resistance of mortar to algae - resistant.

Example 2

To achieve the usable mortar, the following ingredients were used: 28% of Portland cement CEM I 32.5R by weight, 64% of quartz sand of grain size 0.1-1.25 mm by weight, 3% of quartz sand of grain size 0.1-0.2 mm by weight, 4% of limestone flour of grain size of up to 0.5 mm by weight, 1% of quartz flour of grain size of up to 0.25 mm by weight, 0.1 % of modified methylhydroxyethylcellulose of viscosity of 15000 mPa·s by weight, 0.8% of redispersible powder on the basis of vinyl acetate co-polymer and ethylene by weight, 0.01% of aerating additive by weight, 4% of ferric pigment by weight, 0.1% nanometer-sized additive belongs to the group of silicates, alkaline activated, modified by organic ingredients by weight, 0.3% of hydrophobic agent in the form of silicone, powder of nanometric size in capsules in wax envelopes by weight, 0.03% of biocide by weight, and 15.0% of water in relation to dry mass by weight. The mortar was prepared for tests in accordance with PN EN-998-2 standard.

Then, the following tests were conducted:

-absorption of water, according to PN-EN 1015-18 standard "Methods of Testing Mortars for Walls - Part 18: Determination of water absorption factor caused by capillary raising of hardened mortar". The test consists in measurement of the amount of water absorbed in the given time on the fractures of hardened and stabilised beams of the following dimensions: 4x4x16 cm.

-compression strength according PN-EN 1015-11 standard "Methods of Testing Mortars for Walls - Part 11: Determination of compression and bending strength of the hardened mortar". The test consists in measurement of compression strength of beams of the following dimensions: 4x4x16 cm with the use of a hydraulic press.

-mortar's ability to block migration of sodium sulphate was also tested

by our own method. The test consists in storing for the period of 2 months

beams of the following dimensions: 4x4x16 cm made of mortar in saturated solution of sodium sulphate. The test result consists in observation of surfaces and salt migrations through the mortar on the beam broken in half after 2 months.

-mortar's resistance to algae was also tested. The test consists in storing on the culture medium the properly prepared samples of mortars in the form of rings (stabilised in normal conditions for 48 hours, then rinsed for 2 days so that the sample was in cold water for 8 hours a day) infected with a mixture of green and blue-green algae in the humidity chamber in temperature of 22°C for 12 hours under fluorescent light, and then for 12 hours in darkness each day. The test result consists in observation of the surface of the sample after a week from infection.

According to the example, the following results were achieved:

water absorption - 0.03 kg/m²· min^{1/2}

compression strength - 17 MPa

mortar's ability to block migration of sodium sulphate - no slats crystallised inside the mortar, surface of mortar was clear

resistance of mortar to algae - resistant.

Example 3

To achieve the usable mortar, the following ingredients were used: 15% of Portland cement CEM I 32.5R by weight, 59% of quartz sand of grain size 0.1-1.25 mm by weight, 10% of quartz sand of grain size 0.1-0.2 mm by weight, 5% of limestone flour of grain size of up to 0.5 mm by weight, 5% of quartz flour of grain size of up to 0.25 mm by weight, 0.3% of modified methylhydroxyethylcellulose of viscosity of 15000 mPa·s by weight, 1% of redispersible powder on the basis of vinyl acetate co-polymer and ethylene by weight, 0.01% of aerating additive by weight, 0.5% of ferric pigment by weight, 0.5% nanometer-sized additive belongs to the group of silicates, alkaline activated, modified by organic ingredients by weight, 0.2% of hydrophobic agent in the form of silicone, powder of nanometric size in capsules in wax envelopes by weight, 0.3% of biocide by weight, 1 % of micro-silica by weight, 5% of blast furnace slag by weight, and 18.0% of water in relation to dry mass by weight. The mortar was prepared for tests in accordance with PN EN-998-2 standard.

Then, the following tests were conducted:

-absorption of water, according to PN-EN 1015-18 standard "Methods of Testing Mortars for Walls - Part 18: Determination of water absorption factor caused by capillary raising of hardened mortar". The test consists in measurement of the amount of water absorbed in the given time on the fractures of hardened and stabilised beams of the following dimensions: 4x4x16 cm.

-compression strength according PN-EN 1015-11 standard "Methods of Testing Mortars for Walls - Part 11: Determination of compression and bending strength of the hardened mortar". The test consists in measurement of compression strength of beams of the following dimensions: 4x4x16 cm with the use of a hydraulic press.

-mortar's ability to block migration of sodium sulphate was also tested

by our own method. The test consists in storing for the period of 2 months

beams of the following dimensions: 4x4x16 cm made of mortar in saturated solution of sodium sulphate. The test result consists in observation of surfaces and salt migrations through the mortar on the beam broken in half after 2 months.

-mortar's resistance to algae was also tested. The test consists in storing on the culture medium the properly prepared samples of mortars in the form of rings (stabilised in normal conditions for 48 hours, then rinsed for 2 days so that the sample was in cold water for 8 hours a day) infected with a mixture of green and blue-green algae in the humidity chamber in temperature of 22°C for 12 hours under fluorescent light, and then for 12 hours in darkness each day. The test result consists in observation of the surface of the sample after a week from infection.

According to the example, the following results were achieved:

water absorption - 0.02 kg/m²·min^{1/2}

compression strength - 11 MPa

mortar's ability to block migration of sodium sulphate - no slats crystallised inside the mortar, surface of mortar was clear

resistance of mortar to algae - resistant.

Example 5

To achieve the usable mortar, the following ingredients were used: 17% of Portland cement CEM I 32.5R by weight, 65% of quartz sand of grain size 0.1-1.25 mm by weight, 7% of quartz sand of grain size 0.1-0.2 mm by weight, 4% of limestone flour of grain size of up to 0.5 mm by weight, 4% of quartz flour of grain size of up to 0.25 mm by weight, 0.05% of modified methylhydroxyethylcellulose of viscosity of 15000 mPa·s by weight, 0.5% of redispersible powder on the basis of vinyl acetate co-polymer and ethylene by weight, 0.01% of aerating additive by weight, 2% of ferric pigment by weight, 0.05% nanometer-sized additive belongs to the group of silicates, alkaline activated, modified by organic ingredients by weight, 0.5% of hydrophobic agent in the form of silicone, powder of nanometric size in capsules in wax envelopes by weight, 0.25% of biocide by weight, 3% by weight of fly-ash, 0.02% by weight of starch ether, 2% of flexibility-improving additive by weight, added in the form of ready resin dispersion of acrylic co-polymer and 17% of water in relation to dry mass by weight. The mortar was prepared for tests in accordance with PN EN-998-2 standard.

Then, the following tests were conducted:

-absorption of water, according to PN-EN 1015-18 standard "Methods of Testing Mortars for Walls - Part 18: Determination of water absorption factor caused by capillary raising of hardened mortar". The test consists in measurement of the amount of water absorbed in the given time on the fractures of hardened and stabilised beams of the following dimensions: 4x4x16 cm.

-compression strength according PN-EN 1015-11 standard "Methods of Testing Mortars for Walls - Part 11: Determination of compression and bending strength of the hardened mortar". The test consists in measurement of compression strength of beams of the following dimensions: 4x4x16 cm with the use of a hydraulic press.

-mortar's ability to block migration of sodium sulphate was also tested

by our own method. The test consists in storing for the period of 2 months

beams of the following dimensions: 4x4x16 cm made of mortar in saturated solution of sodium sulphate. The test result consists in observation of surfaces and salt migrations through the mortar on the beam broken in half after 2 months.

-mortar's resistance to algae was also tested. The test consists in storing on the culture medium the properly prepared samples of mortars in the form of rings (stabilised in normal conditions for 48 hours, then rinsed for 2 days so that the sample was in cold water for 8 hours a day) infected with a mixture of green and blue-green algae in the humidity chamber in temperature of 22°C for 12 hours under fluorescent light, and then for 12 hours in darkness each day. The test result consists in observation of the surface of the sample after a week from infection.

According to the example, the following results were achieved:

water absorption - 0.02 kg/m²· min^{1/2}

compression strength - 13 MPa

mortar's ability to block migration of sodium sulphate - no slats crystallised inside the mortar, surface of mortar was clear

resistance of mortar to algae - resistant.

Example 6

To achieve the usable mortar, the following ingredients were used: 20% of Portland cement CEM I 32.5R by weight, 56% of quartz sand of grain size 0.1-1.25 mm by weight, 3% of quartz sand of grain size 0.1-0.2 mm by weight, 8% of limestone flour of grain size of up to 0.5 mm by weight, 2% of quartz flour of grain size of up to 0.25 mm by weight, 0.05% of modified methylhydroxyethylcellulose of viscosity of 15000 mPa·s by weight, 0.5% of redispersible powder on the basis of vinyl acetate co-polymer and ethylene by weight, 0.02% of aerating additive by weight, 0.1 % of ferric pigment by weight, 0.2% nanometer-sized additive belongs to the group of silicates, alkaline activated, modified by organic ingredients by weight, 0.2% of hydrophobic agent in the form of silicone, powder of nanometric size in capsules in wax envelopes by weight, 0.1 % of biocide by weight, 7% by weight of fly-ash, 4% of blast furnace slag by weight, 3% of flexibility-improving additive by weight, added in the form of ready resin dispersion of styrene-butadiene co-polymer, 0.02% of guar gum ether by weight, and 18% of water in relation to dry mass by weight. The mortar was prepared for tests in accordance with PN EN-998-2 standard.

Then, the following tests were conducted:

-absorption of water, according to PN-EN 1015-18 standard "Methods of Testing Mortars for Walls - Part 18: Determination of water absorption factor caused by capillary raising of hardened mortar". The test consists in measurement of the amount of water absorbed in the given time on the fractures of hardened and stabilised beams of the following dimensions: 4x4x16 cm.

-compression strength according PN-EN 1015-11 standard "Methods of Testing Mortars for Walls - Part 11: Determination of compression and bending strength of the hardened mortar". The test consists in measurement of compression strength of beams of the following dimensions: 4x4x16 cm with the use of a hydraulic press.

-mortar's ability to block migration of sodium sulphate was also tested

by our own method. The test consists in storing for the period of 2 months

beams of the following dimensions: 4x4x16 cm made of mortar in saturated solution of sodium sulphate. The test result consists in observation of surfaces and salt migrations through the mortar on the beam broken in half after 2 months.

-mortar's resistance to algae was also tested. The test consists in storing on the culture medium the properly prepared samples of mortars in the form of rings (stabilised in normal conditions for 48 hours, then rinsed for 2 days so that the sample was in cold water for 8 hours a day) infected with a mixture of green and blue-green algae in the humidity chamber in temperature of 22°C for 12 hours under fluorescent light, and then for 12 hours in darkness each day. The test result consists in observation of the surface of the sample after a week from infection.

According to the example, the following results were achieved:

water absorption - 0.03 kg/m²· min^{1/2}

compression strength - 15 MPa

mortar's ability to block migration of sodium sulphate - no slats crystallised inside the mortar, surface of mortar was clear

resistance of mortar to algae - resistant.

Example 7

To achieve the usable mortar, the following ingredients were used: 18% of Portland cement CEM I 32.5R by weight, 57% of quartz sand of grain size 0.1-1.25 mm by weight, 3% of quartz sand of grain size 0.1-0.2 mm by weight, 7% of limestone flour of grain size of up to 0.5 mm by weight, 3% of quartz flour of grain size of up to 0.25 mm by weight, 0.2% of modified methylhydroxyethylcellulose of viscosity of 15000 mPa·s by weight, 0.5% of redispersible powder on the basis of vinyl acetate co-polymer and ethylene by weight, 0.01% of aerating additive by weight, 1% of ferric pigment by weight, 0.2% nanometer-sized additive belongs to the group of silicates, alkaline activated, modified by organic ingredients by weight, 0.2% of hydrophobic agent in the form of silicone, powder of nanometric size in capsules in wax envelopes by weight, 0.15% of biocide by weight, 10% by weight of fly-ash, 2% of blast furnace slag by weight, 0.1 % by weight of calcium formate, plasticiser in the amount of 0.5% of the cement weight, and 16% of water in relation to dry mass by weight. The mortar was prepared for tests in accordance with PN EN-998-2 standard.

Then, the following tests were conducted:

-absorption of water, according to PN-EN 1015-18 standard "Methods of Testing Mortars for Walls - Part 18: Determination of water absorption factor caused by capillary raising of hardened mortar". The test consists in measurement of the amount of water absorbed in the given time on the fractures of hardened and stabilised beams of the following dimensions: 4x4x16 cm.

-compression strength according PN-EN 1015-11 standard "Methods of Testing Mortars for Walls - Part 11: Determination of compression and bending strength of the hardened mortar". The test consists in measurement of compression strength of beams of the following dimensions: 4x4x16 cm with the use of a hydraulic press.

-mortar's ability to block migration of sodium sulphate was also tested

by our own method. The test consists in storing for the period of 2 months

beams of the following dimensions: 4x4x16 cm made of mortar in saturated solution of sodium sulphate. The test result consists in observation of surfaces and salt migrations through the mortar on the beam broken in half after 2 months.

-mortar's resistance to algae was also tested. The test consists in storing on the culture medium the properly prepared samples of mortars in the form of rings (stabilised in normal conditions for 48 hours, then rinsed for 2 days so that the sample was in cold water for 8 hours a day) infected with a mixture of green and blue-green algae in the humidity chamber in temperature of 22°C for 12 hours under fluorescent light, and then for 12 hours in darkness each day. The test result consists in observation of the surface of the sample after a week from infection.

According to the example, the following results were achieved:

water absorption - 0.02 kg/m²· min^{1/2}

compression strength - 14 MPa

mortar's ability to block migration of sodium sulphate - no slats crystallised inside the mortar, surface of mortar was clear

resistance of mortar to algae - resistant.

Example 8

To achieve the usable mortar, the following ingredients were used: 17% of Portland cement CEM I 32.5R by weight, 62.5% of quartz sand of grain size 0.1-1.25 mm by weight, 5% of quartz sand of grain size 0.1-0.2 mm by weight, 6% of limestone flour of grain size of up to 0.5 mm by weight, 4% of quartz flour of grain size of up to 0.25 mm by weight, 0.1 % of modified methylhydroxyethylcellulose of viscosity of 15000 mPa·s by weight, 0.5% of redispersible powder on the basis of vinyl acetate co-polymer and ethylene by weight, 0.01 % of aerating additive by weight, 4% of ferric pigment by weight, 0.3% nanometer-sized additive belongs to the group of silicates, alkaline activated, modified by organic ingredients by weight, 0.2% of hydrophobic agent in the form of silicone, powder of nanometric size in capsules in wax envelopes by weight, 0.2% of biocide by weight, 5% of micro-silica by weight, 5% of blast furnace slag by weight, 0.05% of guar gum ether by weight, and 17% of water in relation to dry mass by weight. The mortar was prepared for tests in accordance with PN EN-998-2 standard.

Then, the following tests were conducted:

-absorption of water, according to PN-EN 1015-18 standard "Methods of Testing Mortars for Walls - Part 18: Determination of water absorption factor caused by capillary raising of hardened mortar". The test consists in measurement of the amount of water absorbed in the given time on the fractures of hardened and stabilised beams of the following dimensions: 4x4x16 cm.

-compression strength according PN-EN 1015-11 standard "Methods of Testing Mortars for Walls - Part 11: Determination of compression and bending strength of the hardened mortar". The test consists in measurement of compression strength of beams of the following dimensions: 4x4x16 cm with the use of a hydraulic press.

-mortar's ability to block migration of sodium sulphate was also tested

by our own method. The test consists in storing for the period of 2 months

beams of the following dimensions: 4x4x16 cm made of mortar in saturated solution of sodium sulphate. The test result consists in observation of surfaces and salt migrations through the mortar on the beam broken in half after 2 months.

-mortar's resistance to algae was also tested. The test consists in storing on the culture medium the properly prepared samples of mortars in the form of rings (stabilised in normal conditions for 48 hours, then rinsed for 2 days so that the sample was in cold water for 8 hours a day) infected with a mixture of green and blue-green algae in the humidity chamber in temperature of 22°C for 12 hours under fluorescent light, and then for 12 hours in darkness each day. The test result consists in observation of the surface of the sample after a week from infection.

According to the example, the following results were achieved:

water absorption - 0.02 kg/m²· min^{1/2}

compression strength - 14 MPa

mortar's ability to block migration of sodium sulphate - no slats crystallised inside the mortar, surface of mortar was clear

resistance of mortar to algae - resistant.

## Claims

1. Mortar especially for shaped clinker bricks comprised of the dry mixture of cement, fillers and chemical and requiring addition of water only, **characterised in that** contains from 15 to 28% by weight cement, from 50 to 68% by weight of quartz sand of grain size from 0.1 to 1.25 mm, from 2 to 10% by weight of quartz of grain size from 0.1 to 0.2 mm, from 4 to 10% by of limestone flour of grain size of up to 0.5 mm, from 1 to 5% by weight of quartz flour of grain size of up to 0.25 mm, modified cellulose ether from 0.05 to 0.3% by weight, redispersible powder from 0.5 to 1.0% by weight, aerating additive in the amount from 0.01 to 0.02% by weight, favourably of and non-organic pigments in the amount from 0.1 to 4% by weight, additive of nanometric size favourably belonging to the group of silicates in the amount from 0.05 to 0.5% by weight, hydrophobic agent in the form of silicone/ powder of nanometric size in capsules in wax envelopes in the amount from 0.2 to 0.5% by weight, and favourably in the amount from 0.03 to 0.3% by weight.

2. Mortar, according to claim 1, **characterised in that** contains additives of pozzolanic nature especially fly-ash or silica fume or trass flour in the amount from 0.5 to 1.0%, and/or hydraulic additive ground, granulated blast furnace slag in the amount from 1.0 to 5.0%, and/or starch ethers in the amount from 0.01 to 0.02%, and/or flexibility-improving additives, especially added in the form of ready resin dispersion of acrylic co-polymer and/or styrene-butadiene co-polymer resins in the amount of up to 3%, and/or retarders and/or accelerators of cement and hardening process commonly known in the market and/or plasticisers or superplasticisers in the from 0.5 to 2% of the cement weight, and/or other additives that modify rheology especially guar gum ethers in the amount from 0.02 to 0.1%.

## Patentansprüche

1. Spezialmörtel für Formklinker, zusammengesetzt aus einer Trockenmischung aus Zementfiltern und chemischen Zusatzstoffen nur mit Zugabe von Wasser, **dadurch gekennzeichnet, dass** er zwischen 15 und 28 Gew.-% Zement, zwischen 50 und 68 Gew.-% Quarzsand mit einer Körnung von 0,1 bis 1,25 mm, zwischen 2 und 10 Gew.-% Quarzsand mit einer Körnung von 0,1 bis 0,2 mm, zwischen 4 und 10 Gew.-% Kalksteinmehl mit einer Körnung bis zu 0,5 mm, zwischen 1 und 5 Gew.-% Quarzmehl mit einer Körnung bis zu 0,25 mm, zwischen 0,05 und 0,3 Gew.-% modifizierten Celluloseether, zwischen 0,5 und 1,0 Gew.-% redispergierbares Dispersionspulver, entlüftende Zusatzstoffe in einer Menge von 0,01 bis 0,02 Gew.-%, vorzugsweise organische und anorganische Pigmente, in einer Menge von 0,1 bis 4 Gew.-%, nanometrische Zuschlagstoffe, vorzugsweise aus der Gruppe der Silikate, in einer Menge von 0,05 bis 0,5 Gew.-%, hydrophobierende Mittel in Form von Silikonpuder in nanometrischer Größe in Kapseln mit Wachshülle in einer Menge von 0,2 bis 0,5 Gew.-% sowie Biozid-Wirkstoffe, vorzugsweise in einer Menge von 0,03 bis 0,3 Gew.-% enthält.

2. Mörtel nach Anspruch 1, **dadurch gekennzeichnet, dass** er puzzolanische Zusatzstoffe, insbesondere Flugasche, Silicastaub oder Trasspulver, in einer Menge von 0,5 bis 1,0 % und/oder einen hydraulischen Zusatzstoff, insbesondere Hüttensandmehl, in einer Menge von 1,0 bis 5,0 % und/oder veretherte Stärken in einer Menge von 0,01 bis 0,02 % und/oder Zusatzstoffe zur Erhöhung der Flexibilität, die als fertig gemischte Kunstharzdispersion aus Acryl-Copolymer- und/oder Styrol-Butadien-Copolymer-Harzen in einer Menge von bis zu 3 % zugegeben werden , und/oder marktübliche Zement-Abbindeverzögerer oder -beschleuniger und/oder Fließmittel oder Superverflüssiger in einer Menge von 0,5 bis 2 % des Zementgewichts und/oder andere Zusatzstoffe zur Veränderung der Fließeigenschaften, insbesondere Guarether, in einer Menge von 0,02 bis 0,1 %, enthält.

## Revendications

1. Mortier, essentiellement pour les briques recuites façonnées, composé du mélange sec de ciment, matières de remplissage et additifs chimiques et nécessitant uniquement un ajout d'eau, **caractérisé en ce qu'**il contient de 15 à 28 % en poids de ciment, de 50 à 68 % en poids de sable de quartz d'une granulométrie de 0,1 à 1,25 mm, de 2 à 10 % en poids de sable de quartz d'une granulométrie de 0,1 à 0,2 mm, de 4 à 10 % en poids de farine de calcaire d'une granulométrie maximale de 0,5 mm, de 1 à 5 % en poids de farine de quartz d'une granulométrie maximale de 0,25 mm, de 0,05 à 0,3 % en poids d'éther de cellulose modifié, de 0,5 à 1,0 % en poids de poudre redispersible, de 0,01 à 0,02 % en poids d'additifs d'aération, de 0,1 à 4 % en poids de pigments organiques et non organiques favorables, de 0,05 à 0,5 % en poids d'additif de taille nanométrique appartenant favorablement au groupe des silicates, de 0,2 à 0,5 % en poids d'agent hydrophobe sous forme de poudre de silicone de taille nanométrique dans des capsules enveloppées de cire et de 0,03 à 0,3 % en poids de biocide favorable.

2. Mortier, conformément à la revendication 1, **caractérisé en ce qu'**il contient des additifs de nature pouzzolanique, particulièrement de 0,5 à 1,0 % de cendres volantes ou de fumée de silice ou de farine de trass, et / ou un additif hydraulique, en particulier de 1,0 à 5,0 % de laitier de haut fourneau concassé, et / ou de 0,01 à 0,02 % d'éthers d'amidon, et / ou des additifs améliorant la flexibilité, surtout ajoutés sous forme de dispersion de résine prête de copolymère acrylique et / ou de 3 % de résines copolymères de styrène-butadiène, et / ou des retardateurs et / ou des accélérateurs de liant de ciment et de processus de durcissement communément répandus sur le marché et / ou de 0,5 à 2 % en poids de ciment de plastifiants ou de supersplastifiants, et / ou d'autres additifs qui modifient la rhéologie, particulièrement de 0,02 à 0,1 % d'éthers de gomme de guar.
